(19) Europäisches Patentamt

European Patent Office

Office européen des brevets

(11) **EP 1 260 785 B1**

(12) **EUROPEAN PATENT SPECIFICATION**

(45) Date of publication and mention
of the grant of the patent:
**16.03.2005 Bulletin 2005/11**

(51) Int Cl.[7]: **F42C 13/04**, G01S 13/50

(21) Application number: **01304655.2**

(22) Date of filing: **25.05.2001**

(54) **Passive proximity fuze utilizing Doppler effect**

Passiver Doppler-Annäherungszünder

Fusée de proximité passive utilisant l'effet Doppler

(84) Designated Contracting States:
**DE FR GB**

(43) Date of publication of application:
**27.11.2002 Bulletin 2002/48**

(73) Proprietor: **Raytheon Company
El Segundo, California 90245 (US)**

(72) Inventor: **Foster, Carl G.
Tucson AZ 85718 (US)**

(74) Representative: **Jackson, Richard Eric et al
Carpmaels & Ransford,
43 Bloomsbury Square
London WC1A 2RA (GB)**

(56) References cited:
**EP-A- 0 618 460        WO-A-96/18079
GB-A- 2 177 796        US-A- 3 945 008
US-A- 4 503 775        US-A- 4 613 867
US-A- 5 241 313        US-A- 5 406 291
US-A- 5 617 097        US-B1- 6 232 922**

## Description

## BACKGROUND OF THE INVENTION

Field of the Invention:

The present invention relates to electronic circuits and systems. More specifically, the present invention relates to electronic fuzes used in weapon systems.

Description of the Related Art:

For many applications, there is a need to provide a fuze for a munition. For certain applications, a low-cost, passive proximity fuze is needed. For example, the Global Positioning System (GPS) is currently being used to provide accurate munitions guidance to target via a constellation of satellites. It is anticipated that the use of a plurality of low cost GPS transmitters may be deployed as a countermeasure to thwart the GPS guidance system of a missile or other munition in flight.

Hence, there is a need for a munition capable of homing in on and destroying a GPS jammer. The jamming transmitters would be small and elevated making destruction problematic. Low cost missiles are therefore currently being considered for this application. The missiles would be traveling at high speed and therefore would typically require both a guidance system and a fuze. The guidance system would steer the weapon to the target and attempt to impact it, and an RF fuze would be needed to fuze the weapon if it missed the target and the impact fuze does not function. This would add considerably to the cost of the munition in that a radar transmitter, receiver, and signal processor would typically be required. With respect to the passive fuze approach, no known RF fuze would suffice and an active fuze would be expensive in the requirement of a radar transmitter system or other active detection methodology.

Unfortunately, the interfering jammers are anticipated to be low cost jammers deployed in large numbers. Accordingly, the high costs associated with the above-described active fuze and precision guidance system approaches for the anti-jammer munition render these approaches impractical. In addition, the guidance system and the active fuze approaches would also adversely impact the form factor of the solution.

United Kingdom patent application GB 2 177 796 A discloses a passive system for determining the location, speed and direction of a target emitting a signal. The system is comprised of a directional receiver used to detect a plurality of signals emitted by the target and subsequently reflected by artefacts in medium surrounding the target. The frequency of each of the reflected signals has a Doppler shift indicative of the angle between the target and the reflective artefact. The position, speed, and direction of the target are then determined by processing the Doppler shift data along with the known bearings from the receiver to each of the reflective artefacts.

United States patent US 3 945 008 discloses an active fuze system that uses multiple emitting frequencies and multiple receiver channels with logic to detonate the fuze when appropriate events occur in each of the channels such as the zero crossing of the Doppler signal. The second derivative of the Doppler signal is used to amplify the variation of the Doppler signal.

International patent application WO 96/18079 discloses a passive fuze system that triggers when the ratio of the amplitudes of the signals received via a wide-lobe antenna and a narrow-lobe antenna exceed some threshold. Also the first derivative of the signals is taken into account.

Hence, a need remains in the art for a low cost-effective alternative to allow for the use of an inexpensive munition to destroy small, inexpensive jamming signal source targets.

## SUMMARY OF THE INVENTION

The need in the art is addressed by the present invention which provides a passive system for detecting proximity to a signal source, comprising:

a receiver for receiving a signal from said signal source and outputting a Doppler signal indicative of the Doppler shift therein; and characterised by a circuit for computing a second derivative of said Doppler signal and providing an output signal in response thereto.

In the illustrative embodiment, the receiver is an FM receiver. The mechanism for detecting a change in the Doppler shift may be implemented with discrete analog circuitry or digital circuitry. In an illustrative analog implementation, first and second resistive/capacitive (RC) networks are employed to compute a second derivative of the Doppler shift signal output by the receiver. This signal is then amplified and thresholded to provide the output detonation signal.

In an illustrative digital implementation, the output of the receiver is converted to digital and processed by a digital signal processor (DSP). The DSP computes the second derivative of the Doppler shift signal output by the receiver in response to a stored program for computing same. The output of the DSP is the detonation signal. Hence, detonation is achieved at the closest point of approach of the munition to the target with an inexpensive passive solution.

## BRIEF DESCRIPTION OF THE DRAWINGS

Fig. 1 is a diagram which depicts an operational environment of the proximity fuze of the present invention.

Fig. 2 is a schematic diagram of an illustrative analog implementation of the fuze of the present invention.

Fig. 2a is a diagram depicting the Doppler shift $f_d(t)$ of the received signal as a function of time.

Fig. 2b is a diagram depicting a first derivative of the Doppler shift $f_d(t)$ of the received signal as a function of time.

Fig. 2c is a diagram depicting a second derivative of the Doppler shift $f_d(t)$ of the received signal as a function of time.

Fig. 3 is a diagram which depicts the output of the comparator of the inventive fuze.

Fig. 4 is a diagram which depicts the output of the fuze of the present invention.

Fig. 5 shows an alternative digital implementation of the fuze of the present invention.

## DESCRIPTION OF THE INVENTION

Illustrative embodiments and exemplary applications will now be described with reference to the accompanying drawings to disclose the advantageous teachings of the present invention.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

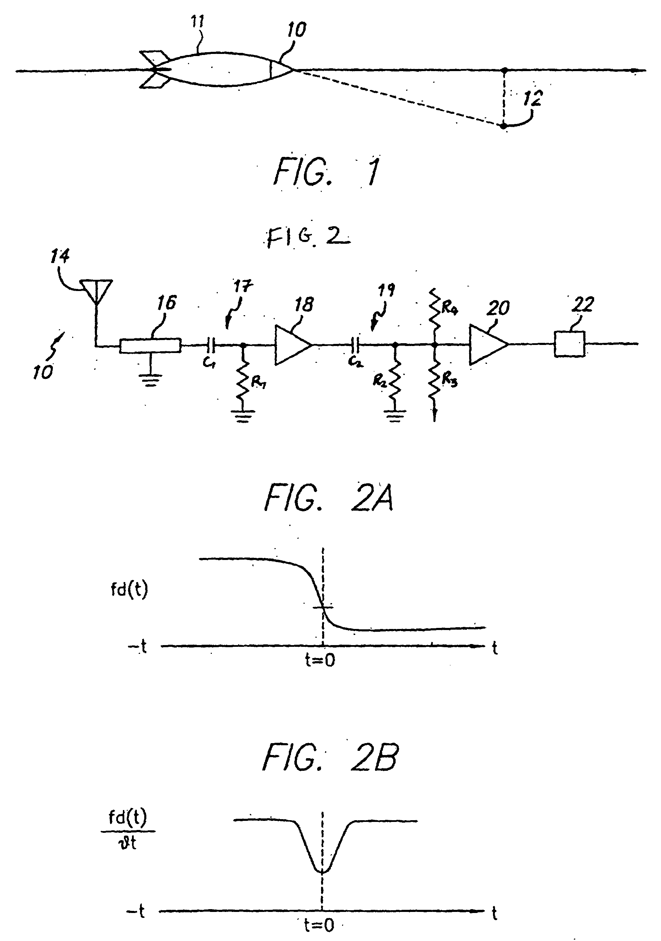

Fig. 1 is a diagram which depicts an operational environment of the proximity fuze of the present invention. The inventive fuze 10 is adapted to be used on a munition 11 for destruction of a jamming transmitter 12.

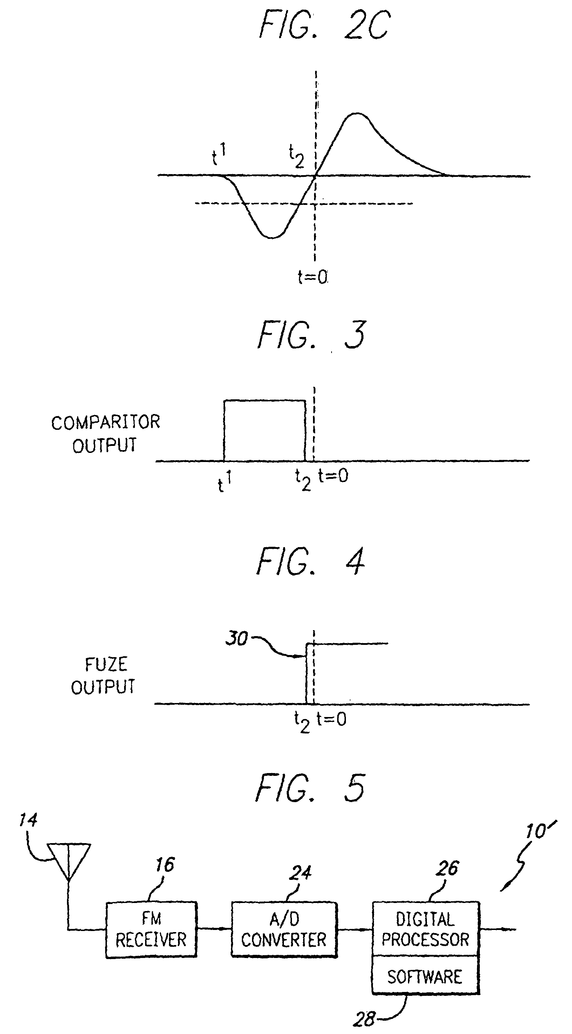

Fig. 2 is a schematic diagram of an illustrative analog implementation of the fuze of the present invention. The fuze 10 includes an antenna 14 that receives a signal transmitted by the jamming transmitter 12 of Fig. 1 and provides it to a receiver 16. In the best mode, the receiver 16 is adapted to receive frequency modulated (FM) signals and provide an output in response thereto. Preferably, the receiver 16 is tunable to enable use against jammer operating at various carrier frequencies. The receiver 16 outputs a signal indicative of a Doppler shift in a carrier signal transmitted by the jammer 12 as the munition 11 approaches. The Doppler shift phenomenon is well known in the art. When a periodic signal is transmitted between a source and a receiver which are in motion relative to one another, a shift in the periodicity of the received signal may be detected. This shift is known as the Doppler shift for which the associated Doppler frequency $f_d$ is given by:

$$f_d = V \cdot f_t \cos\alpha / c \qquad [1]$$

where

$f_t$ is the frequency of the transmitter;
V = velocity of the munition 11;
c = the speed of light; and
$\alpha$ = the angle between the line-of-flight and the transmitter 12 as depicted in Fig. 1.

As a function of time, equation [1] may be expressed as:

$$f_d(t) = V \cdot f_t V t / c \cdot (V^2 t^2 + m^2)^{1/2} \qquad [2]$$

were 'm' is the miss distance.

The objective is to detonate, or fuze, the munition 11 at the point of closest approach to the jamming transmitter 12. In accordance with the present teachings, the closest point of approach is detected by taking the second derivative of $f_d(t)$ and detecting the point of inflection thereof (i.e., when the second derivative crosses zero). This is depicted in Figs. 2a - c as described more fully below.

Fig. 2a is a diagram depicting the Doppler shift $f_d(t)$ of the received signal as a function of time.

Fig. 2b is a diagram depicting a first derivative of the Doppler shift $f_d(t)$ of the received signal as a function of time.

Fig. 2c is a diagram depicting a second derivative of the Doppler shift $f_d(t)$ of the received signal as a function of time. In Figs. 2a - c, the point of closest approach is at t = 0.

Returning to Fig. 2, in the analog implementation, the closest point of approach is detected by two RC networks, $R_1 C_1$ (17) and $R_2 C_2$ (19) and a comparator. As will be appreciated by one of ordinary skill in the art, the RC networks are connected as high pass filters to differentiate the Doppler signal output by the receiver 16. Hence, the first RC network $R_1 C_1$ (17) provides a first derivative of the Doppler signal output by the receiver 16 while the second RC network $R_2 C_2$ (19) outputs a second derivative of the Doppler signal output by the receiver 16. An amplifier 18 is disposed between the first and second RC stages to decouple the two networks.

A comparator 20 compares the output of the second differentiator $R_2 C_2$ (19) to a threshold set by a voltage divider network consisting of resistors $R_3$ and $R_4$ connected to a reference terminal thereof. The voltage divide essentially determines the range at which the fuze detonates.

Fig. 3 is a diagram which depicts the output of the comparator of the inventive fuze. As depicted in Fig. 3, the output of the comparator goes high at $t_1$ when the second derivative of the Doppler shift first crosses the comparator threshold voltage and goes low when the second derivative of the Doppler shift crosses the threshold voltage for a second time at $t_2$.

Fig. 4 is a diagram which depicts the output of the fuze of the present invention. As depicted in Fig. 4, at $t_2$ the munition is triggered and explodes at the closest point of approach at t=0.

Returning to Fig. 2, the output of the comparator 20 may be connected to an analog-to-digital (or analog-to-TTL) converter 22 to provide a digital output pulse if needed.

Fig. 5 shows an alternative digital implementation of the fuze of the present invention. In the digital implementation, the fuze 10' includes an analog to digital converter 24 which digitizes the output of the receiver 16 and provides the digitized Doppler shift to a digital signal processor (DSP) 26. The DSP may be implemented with a microprocessor or programmable logic gate as will be appreciated by one of ordinary skill in the art. In a microprocessor implementation, the DSP runs software (depicted generally at 28) to successively compute the second derivative of the Doppler shift of the signal and provides an output signal in response thereto.

Those skilled in the art will appreciate that the present invention is not limited to the illustrative implementations and that the passive Doppler fuze of the present invention operates independently of the absolute frequency of the transmitted signal.

Thus, the present invention has been described herein with reference to a particular embodiment for a particular application. Those having ordinary skill in the art and access to the present teachings will recognize additional modifications, applications and embodiments within the scope thereof.

The invention could also be used to hit any transmitter. For instance, a transmitter can be attached to an aircraft or ground vehicle that is used to assist the homing guidance unit to locate the target. The invention is used to fuze the explosive charge even if the guidance system, in conjunction with the aerodynamic controls, misses the target.

The invention can be used to attack any transmitter that is deemed to be a military target. It will work against broadcast antennas.

It is therefore intended by the appended claims to cover any and all such applications, modifications and embodiments within the scope of the present invention.

## Claims

1. A passive system (10) for detecting proximity to a signal source, comprising:

   a receiver (16) for receiving a signal from said signal source and outputting a Doppler signal indicative of the Doppler shift therein; and **char-**

**acterised by**
a circuit for computing a second derivative of said Doppler signal and providing an ignition output signal in response thereto when said second derivative of said Doppler signal crosses zero.

2. The invention of claim 1 wherein said receiver (16) is an FM receiver.

3. The invention of claim 1 or claim 2 wherein said circuit includes components for differentiating said Doppler signal and providing a differentiated Doppler signal in response thereto.

4. The invention of claim 3 wherein said circuit includes a first resistor and capacitor network ($R_1C_1$) (17).

5. The invention of claim 4 wherein said circuit includes components for differentiating said differentiated Doppler signal.

6. The invention of claim 4 or claim 5 wherein said circuit includes a second resistor and capacitor network ($R_2C_2$) (19).

7. The invention of any one of claims 1 to 6 wherein said circuit includes a circuit for digitizing the received signal and a digital signal processor (26).

## Patentansprüche

1. Ein passives System (10) zum Bestimmen der Nähe einer Signalquelle mit:

   einem Empfänger (16) zum Empfangen eines Signals von der Signalquelle und zum Ausgeben eines Doppler-Signals, das dessen Doppler-Verschiebung anzeigt; und **gekennzeichnet durch**
   eine Schaltung zur Berechnung einer zweiten Ableitung des Doppler-Signals und zur Bereitstellung eines Zündausgangssignals als Antwort darauf, wenn die zweite Ableitung des Doppler-Signals Null durchläuft.

2. Die Erfindung nach Anspruch 1, bei der der Empfänger (16) ein FM-Empfänger ist.

3. Die Erfindung nach Anspruch 1 oder 2, bei der die Schaltung Komponenten zum Differenzieren des Doppler-Signals und zur Bereitstellung eines differenzierten Doppler-Signals als Antwort darauf enthält.

4. Die Erfindung nach Anspruch 3, bei der die Schaltung einen ersten Widerstand und ein Kondensatornetzwerk ($R_1C_1$) (17) enthält.

**5.** Die Erfindung nach Anspruch 4, bei der die Schaltung Komponenten zum Differenzieren des differenzierten Doppler-Signals enthält.

**6.** Die Erfindung nach Anspruch 4 oder 5, bei der die Schaltung ein zweites Widerstands- und Kondensatornetzwerk ($R_2C_2$) (19) aufweist.

**7.** Die Erfindung nach irgendeinem der Ansprüche 1 bis 6, bei der die Schaltung eine Schaltung zum Digitalisieren des erhaltenen Signals und einen digitalen Signalprozessor (26) aufweist.

**Revendications**

**1.** Système passif (10) pour détecter la proximité à une source de signaux, comprenant :

un récepteur (16) pour recevoir un signal en provenance de ladite source de signaux et délivrer un signal Doppler indicateur d'un décalage Doppler dans celui-ci ; et **caractérisé par** un circuit pour calculer une dérivée seconde dudit signal Doppler et fournir un signal de sortie d'allumage en réponse à celle-ci, lorsque la dérivée seconde dudit signal Doppler passe par zéro.

**2.** Invention selon la revendication 1, dans laquelle ledit récepteur (16) est un récepteur à modulation de fréquence (MF).

**3.** Invention selon la revendication 1 ou la revendication 2, dans laquelle ledit circuit comporte des composants pour différencier ledit signal Doppler et fournir un signal Doppler différencié en réponse à celui-ci.

**4.** Invention selon la revendication 3, dans laquelle ledit circuit comporte un premier réseau (17) de résistance et condensateur ($R_1C_1$).

**5.** Invention selon la revendication 4, dans laquelle ledit circuit comporte des composants pour différencier ledit signal Doppler différencié.

**6.** Invention selon la revendication 4 ou la revendication 5, dans lequel ledit circuit comporte un deuxième réseau (19) à résistance et condensateur ($R_2C_2$).

**7.** Invention selon l'une quelconque des revendications 1 à 6, dans lequel ledit circuit comporte un circuit pour numériser le signal reçu et un processeur (26) de signal numérique.

FIG. 1

FIG. 2

FIG. 2A

FIG. 2B

# FIG. 2C

# FIG. 3

COMPARITOR
OUTPUT

# FIG. 4

FUZE
OUTPUT

# FIG. 5